## Europäisches Patentamt

## European Patent Office

## Office européen des brevets

(11) Publication number: **0 028 927**
**B1**

(12)

# EUROPEAN PATENT SPECIFICATION

(45) Date of publication of patent specification: 26.03.86

(21) Application number: 80303986.6

(22) Date of filing: 07.11.80

(51) Int. Cl.⁴: **C 23 F 15/00, C 23 F 11/12, C 23 F 13/00, C 09 J 3/14, C 08 J 5/12**

(54) The use of polyhydroxy compounds for protecting substrates from corrosion, articles and methods for protecting substrates using these compounds and substrates so protected.

(30) Priority: 09.11.79 US 92852

(43) Date of publication of application:
20.05.81 Bulletin 81/20

(45) Publication of the grant of the patent:
26.03.86 Bulletin 86/13

(84) Designated Contracting States:
BE DE FR IT NL SE

(56) References cited:
FR-A-2 391 261
GB-A- 579 556
GB-A- 873 103
GB-A-2 013 168
US-A-3 474 055
US-A-3 705 207

(73) Proprietor: RAYCHEM CORPORATION
300 Constitution Drive
Menlo Park California 94025 (US)

(72) Inventor: Pieslak, George
409 Ironwood Road
Alameda California 94501 (US)
Inventor: Erbes-Mrsny, Kathleen Ann
1767 Holly Avenue
San Bruno California 94066 (US)
Inventor: Fritchle, Elena Clare
665 Shelter Creek Lane Apt 254
San Bruno California 94066 (US)

(74) Representative: Dlugosz, Anthony Charles et al
Raychem Limited Intellectual Property Law
Department Faraday Road
Dorcan Swindon Wiltshire (GB)

Courier Press, Leamington Spa, England.

**Description**

This invention relates to articles for protecting pipes from corrosion.

To protect pipes and pipelines formed from steel or other metals from corrosion, a protective coating is usually applied. The protective coating may be, for example, a polymeric sheet, tape or sleeve of, for example, a polyethylene, bonded to the surface of the pipe. Various adhesives and mastics may be used to bond the coating to the pipe. However, accidental perforations in the coating often occur during installation and use of the pipe or pipeline and expose areas of the pipe to the environment.

Corrosion of a steel or iron pipe when exposed to the environment is due to electrochemical reactions in which the pipe loses iron ions to water in the environment and a localized anodic region is created on the pipe. To prevent the development of these anodic regions and the attendant corrosion of the pipe, an electric current can be imposed along the length of the pipe. The pipe is connected to a negative electrical potential, thus causing the pipe to act as a cathode. In this way, further loss of iron ions is prevented. It is known that adhesive compositions used to bond a protective coating to a pipe are often adversely affected by this imposed electrical current. The result of this is a weakening of the adhesive bond between the coating and the steel pipe causing the coating to separate from the pipe exposing more of the surface of the pipe to the corrosive conditions in the environment. This phenomenon is referred to in the art as "cathodic disbonding".

According to one aspect, the present invention provides an article for protecting a substrate from corrosion by means of a hot-melt adhesive or mastic coating, which comprises a dimensionally-recoverable cover adapted to enclose and engage a surface of the substrate and coated with the adhesive or mastic, the adhesive or mastic containing at least 0.01% by weight, based on the total weight of the adhesive or mastic, of one or more organic, non-phenolic, polyhydroxy compounds in which the hydroxy groups are bonded to at least 50% of the aliphatic or alicyclic carbon atoms in an amount sufficient to impart improved resistance to cathodic disbonding to the adhesive or mastic.

According to another aspect, the invention provides a method of protecting a metal substrate from corrosion, which comprises providing the substrate with a protective dimensionally-recoverable cover and a layer of hot-melt adhesive or mastic disposed between the substrate and the protective cover, the adhesive or mastic containing at least 0.01% by weight, based on the total weight of the adhesive or mastic, of one or more organic, non-phenolic polyhydroxy compounds in which the hydroxy groups are bonded to at least 50% of the aliphatic or alicyclic carbon atoms in an amount sufficient to impart improved resistance to cathodic disbonding to the adhesive or mastic.

According to a further aspect, the invention provides an arrangement, which comprises a metal substrate which is protected from corrosion by a protective dimensionally-recoverable cover and a layer of hot-melt adhesive or mastic disposed between the substrate and cover, the hot-melt adhesive or mastic containing at least 0.01% by weight, based on the total weight of the adhesive or mastic, of one or more organic, non-phenolic polyhydroxy compounds in which the hydroxy groups are bonded to at least 50% of the aliphatic or alicyclic carbon atoms in a amount sufficient to impart improved resistance to cathodic disbonding to the adhesive or mastic.

The following art, cited in the search report, is drawn to the attention of the reader, US—A—3705207 discloses polyamides provided with adhesive properties by the incorporation therein of polyhydric alcohols, e.g. polyvinyl alcohol, mannitol, sorbitol. US—A—3474055 relates to hot-melt adhesive compositions, in particular those with improved repulping properties produced from low cost materials and suitable for bonding a variety of materials. The improved repulpability is achieved by the use of high melting polyhydroxy crystalline compounds, in hot-melt adhesives. FR—A—2391261 is concerned with corrosion inhibitors for addition to wafer and oil emulsions. Addition of saccharides prevents corrosion of aluminium. GB—A—873103 discloses the use of polyhydric alcohols as a sequestering agent in caustic alkali washing solutions.

In the method and the arrangement according to the invention the adhesive or mastic may be applied to the substrate prior to application of the protective cover, although preferably the adhesive or mastic and protective cover are provided as a single article as defined above.

The polyhydroxy compound present in the adhesive or mastic may be one that has one or more aromatic moieties in addition to aliphatic and or alicyclic moieties, but, if so, the hydroxy groups should be aliphatic and or alicyclic hydroxy groups, i.e. not bonded directly to the aromatic ring or rings. Preferably the polyhydroxy compound is an aliphatic or alicyclic polyhydroxy compound, i.e. it contains no aromatic moieties. The polyhydroxy compound preferably has at least one hydroxy group bonded to at least 60%, and especially at least 75% of its aliphatic or alicyclic carbon atoms.

Polyhydroxy compounds which can be used include, for example, monosaccharides, polysaccharides, hydroxy containing synthetic polymers and polyhydric alcohols.

Polysaccharides that can be used include starches and cellulose and derivatives thereof, such as, amylose, amylopectin, cellulose acetate, cellulose nitrate, hydroxyethyl cellulose, ethyl hydroxyethyl cellulose, hydroxypropyl cellulose, and the like. Monosaccharides which can be used include fructose, mannose, maltose, sucrose, glucose, ribose, raffinose, mannitol, sorbitol and similar sugars. Derivatives such as lower alkyl derivatives of the monosaccharides and mixtures of monosaccharides can be used. Hydroxy containing polymers which can be used include polyvinyl alcohol, and various hydrolyzed polymers containing aliphatic carbon atoms, preferably with hydroxyl groups on at least 50% of the carbon atoms. Aliphatic polyhydric alcohols include glycol, glycerol, pentaerythritol and the like.

The adhesive or mastic preferably contains at least 0.1% of the polyhydroxy compound by weight, but preferably not more than 30% and especially not more than 10% of the polyhydroxy compound by weight, based on the total weight of the adhesive or mastic. The preferred range for the content of the polyhydroxy compound is from 0.1 to 5% by weight. More than one polyhydroxy compound may be present in the adhesive or mastic, and, if so, the numerical values for the content of polyhydroxy compound refer to the total content of all the polyhydroxy compounds.

An adhesive is preferred to a mastic, and it can, in general, be any adhesive that is used to bond corrosion protection coatings to metal pipes or other substrates, particularly those used to bond a coating to a pipeline which will carry an impressed current to protect the pipeline from corrosion. Such adhesives include for example those based on thermoplastic polyamides, polyolefins, polyesters, polyurethanes, polysulfides and the like. Examples of mastics include low molecular weight polyisobutylene based mastic composition. Particularly preferred adhesives are those containing polyethylene and ethylene copolymers, for example, copolymers of ethylene with vinyl acetate, maleic anhydride, acrylic acid, methacrylic acid or an alkyl acrylate, for example ethyl acrylate. The most preferred adhesives are those based on ethylene-ethyl acrylate and ethylene-vinyl acetate.

The adhesive or mastic may also contain the usual additives such as tackifiers, fillers, waxes, rubbers and stabilizers. Tackifiers that are used include phenol-formaldehyde resins, hydrocarbon resins, vinyl toluene-alpha-methyl styrene copolymers, polyterpenes, phenol-terpene resins, dibasic acid modified esters, polymerized rosin esters, modified esters and rosins, aromatic hydrocarbon resins, and coumar and coumar-indene resins. Other tackifiers that can be included are well known. Fillers that can be used include pigments and reinforcing agents such as carbon blacks.

Waxes which are usually added to hot melt adhesives are crystalline waxes, such as, low molecular weight polyethylene, oxidized polyethylene waxes, ethylene-vinyl acetate copolymer wax, ethylene-acrylic acid copolymer wax, ethylene-maleic anhydride copolymer wax, atactic polypropylene, and the like. High temperature properties may be improved by incorporation of high, low or medium density polyethylene, linear low density polyethylene or high temperature waxes. Rubbers which can be used include natural and synthetic rubbers, particularly ethylene propylene rubbers, ethylene-propylene-diene rubbers, butyl rubbers, and thermoplastic elastomers such as those based on styrene-butadiene- or styrene-isoprene-styrene linear or radial block co-polymers. Stabilizers which can be used include antioxidants, such as phenolic antioxidants, hindered amine antioxidants, and the like.

The polyhydroxy compound can be blended with the other components to form a homogeneous sealant composition by conventional methods.

Such methods include use of a two roll mill, a Banbury mixer or a Brabender mixer. Temperatures during the mixing or blending procedure should be from about 66°C (150°F) to about 149°C (300°F), preferably from about 121°C (250°F) to about 149°C (300°F). When possible, it is preferred to blend the components at a temperature above the melting point of the polyhydroxy compound to ensure uniform dispersion of the polyhydroxy compound in the adhesive composition.

Incorporation of an organic, non-phenolic polyhydroxy compound in the adhesive or mastic has the advantages that certain properties of the adhesive or mastic may be significantly improved. For example, it has been found that the resistance to cathodic disbonding of various adhesives and mastics used with metals in corrosion protection applications can be improved.

The article according to the invention may for example, be in the form of a dimensionally-recoverable sheet, tape or sleeve coated on at least a portion of one surface thereof with an adhesive composition. Dimensionally recoverable articles are articles, the dimensional configuration of which may be made substantially to change when subjected to the appropriate treatment. Of particular interest are heat-recoverable articles, the dimensional configuration of which may be made substantially to change when subjected to heat treatment. Heat recoverable articles may be produced by deforming an original heat-stable configuration to a dimensionally heat-unstable configuration, in which case the article will assume, or tend to assume, the original heat-stable configuration on the application of heat alone. Examples of heat-recoverable articles may be found in US Patent Specification No. 2,027,962 and UK Patent Specification No. 990,235, the disclosures of which are incorporated herein by reference.

When in the form of a sheet or tape, the article is usually coated on over one entire surface. The sheet or tape is placed on the substrate to be protected with the adhesive coated surface placed in contact with the substrate and then heated to bond the article to the substrate. The substrate can be any metal substrate sought to be protected from corrosion but in practice the substrate is usually a metal pipe and in particular an iron or steel pipe. The sheet or tape is wrapped around the pipe and heated to heat shrink the sheet or tape into the pipe and bond it to the pipe with the adhesive.

When the heat shrinkable article is in the form of a sleeve it is coated with adhesive on the interior surface thereof. The sleeve can be a tube of continuous circumference or a tube which is longitudinally split. The tube is positioned around the pipe and heated to shrink the sleeve onto the pipe and melt the adhesive to bond the sleeve to the pipe.

If a longitudinally split sleeve is used, the longitudinal edges must be held together in some manner, usually with a channel, during the heat shrinking step.

# 0 028 927

The protective cover is preferably formed from a polyolefin for example polyethylene or polypropylene. Other polymers such as polyvinyl chloride and polymeric blends thereof can also be used. Particularly preferred is cross-linked polyethylene.

The articles of this invention can be used for other purposes besides protection of metal substrates. The presence of the polyhydroxy compound in the sealant can, in some cases, improve the adhesion properties with various substrates, including other metals, as well as steel and iron, and polymeric substrates such as articles of polyethylene, polypropylene, polyvinyl chloride and the like. In the pipe protection context it has been found that a patch of polymeric sheet material coated with the adhesive composition can be used to repair damage to the protective coating on the pipe.

The following examples illustrate the invention. In these examples adhesive compositions were prepared containing an adhesive component and a polyhydroxy compound. The adhesives were tested for resistance to cathodic disbondment by using the adhesive to bond a heat shrinkable sleeve of polyethylene to a steel pipe. The polyethylene coated pipe was then tested by method of ASTM G-42-75 to determine the resistance of the adhesive to cathodic disbonding.

Examples 1—6

Adhesive compositions were prepared by thoroughly mixing the ingredients in a two-mill roll at a mixing temperature of 121 to 149°C (250 to 300°F).

An adhesive component was prepared by blending 45 parts of an ethylene-ethyl acrylate copolymer containing 18% ethyl acrylate, 31.5 parts of an ethylene-acrylic acid copolymer wax having an acid number of 40, 5 parts of a phenolformaldehyde resin tackifier, 8 parts of an ethylene-propylene-1,4-hexadiene terpolymer rubber, 10 parts of carbon black and 0.5 parts of 1,2-dihydro-2,2,4-trimethyl quinoline. To the adhesive component was added a polyhydroxy compound as designated below for each example:

| Example | Amount | Polyhydroxy compound |
|---|---|---|
| 1 (Control) | — | None |
| 2 | 10 parts | Polyvinyl alcohol |
| 3 | 10 parts | Anhydrous glucose |
| 4 | 10 parts | Pentaerythritol |
| 5 | 2 parts | Mannitol |
| 6 | 5 parts | Sorbitol |

The adhesive compositions were tested for their resistance to cathodic disbonding by the following test procedure. The results are shown in the Table.

The cathodic disbonding resistance of an adhesive can be tested by the test method found in ASTM G-42-75, method A.

The adhesive composition to be tested was pressed into slabs, 152.4 mm×152.4 mm×0.635 mm (6 inches×6 inches×0.023 inch), in a hot press between two "Teflon" polytetrafluoroethylene, coated plates.

The surface of a steel pipe, 305 mm (12 inches) long and 51 mm (2 inches) in diameter was grit blasted and degreased with solvent and preheated to 121 to 177°C (250—350°F) with a torch. The sample adhesive slab, trimmed to 152.4 mm×101.6 mm×0.635 mm (6 inches×4 inches×0.025 inch), was placed on the preheated pipe and a heat shrinkable sleeve of cross-linked polyethylene was placed over it and heated to shrink the sleeve over the adhesive and pipe. One end of the pipe was then sealed with a heat shrinkable cap.

A hole (holiday) was drilled through the polyethylene coating and adhesive in the middle of the length of pipe to expose the metal surface of the pipe at that point. The pipe was then immersed in an electrolyte solution comprising water and one weight per cent of each of sodium chloride, sodium sulphate, and sodium carbonate. A potential of −1.5 volts was applied to the pipe thus making the pipe a cathode in the electrolyte solution which also contains a sacrificial anode. The sample and electrolyte solution were maintained at a temperature of 80°C for five days. The pipe was then removed and the area around the holiday inspected to determine the extent of disbonding, i.e., the area over which the adhesive bond between the polyethylene coating and the pipe was weakened permitting the polyethylene coating and adhesive to be peeled away. The approximate radius of the disbonded area was measured in millimetres (mm) and recorded.

Example 7

An adhesive composition containing the following ingredients was prepared and tested as in Examples 1—6. This adhesive composition contained 45 parts of an ethylene-ethyl acrylate copolymer containing 18% ethyl acrylate, 32 parts of polyethylene microcrystalline wax, 5 parts of phenol-formaldehyde resin

4

tackifier, 8 parts of ethylene-propylene-1,4-hexadiene terpolymer rubber, 8 parts of carbon black and 1 part of 1,2-dihydro-2,2,4-trimethyl quinoline and 5 parts of anhydrous glucose. The results are given in the Table.

Example 8

An adhesive containing the following ingredients was prepared and tested as in Examples 1—6. This adhesive contained 35 parts of an ethylene-ethyl acrylate copolymer containing 18% ethyl acrylate, 25 parts of a low molecular weight thermoplastic polyamide resin, 25 parts of an ethylene-maleic anhydride copolymer wax having an acid number of 16, 10 parts of an ethylene-propylene-1,4-hexadiene terpolymer rubber, 2 parts of carbon black and 2 parts of 1,2-dihydro-2,2,4-trimethyl quinoline.

Example 9

To the adhesive prepared in Example 8, 10 parts of polyvinyl alcohol was added and incorporated into the adhesive. The adhesives of Examples 8 and 9 were tested as above. The results are shown in the Table.

TABLE

| Example | Polyhydroxy compound | Amount of polyhydroxy compound (parts) | Cathodic disbonding radius |
|---------|----------------------|----------------------------------------|----------------------------|
| 1 | None | — | Complete disbonding |
| 2 | Polyvinyl alcohol | 10 | 9 mm |
| 3 | Glucose | 10 | 7 mm |
| 4 | Pentaerythritol | 10 | 7 mm |
| 5 | Mannitol | 2 | 10 mm |
| 6 | Sorbitol | 5 | 5 mm |
| 7* | Glucose | 5 | 8 mm |
| 8 | None | — | Complete disbonding |
| 9 | Polyvinyl alcohol | 10 | 16 mm |

* This adhesive was also tested as above but at 95°C. The cathodic disbonding radius was 15 mm.

**Claims**

1. An article for protecting a substrate from corrosion by means of a hot-melt adhesive or mastic coating, which comprises a dimensionally-recoverable cover adapted to enclose and engage a surface of the substrate and coated with the adhesive or mastic, the adhesive or mastic containing at least 0.01% by weight, based on the total weight of the adhesive or mastic, of an organic, non-phenolic, polyhydroxy compound in which the hydroxy groups are bonded to at least 50% of the aliphatic or alicyclic carbon atoms in an amount sufficient to impart improved resistance to cathodic disbonding to the adhesive or mastic.

2. An article as claimed in claim 1, wherein the polyhydroxy compound is an aliphatic or alicyclic polyhydroxy compound.

3. An article as claimed in claim 1 or 2, wherein the adhesive or mastic contains a mono- or polysaccharide, a hydroxy containing synthetic polymer or a polyhydric alcohol as the polyhydroxy compound.

4. An article as claimed in claim 3, wherein the adhesive or mastic contains, as the polyhydroxy compound, one or more of the following: fructose, mannose, maltose, sucrose, glucose, ribose, raffinose, mannitol, sorbitol, amylose, amylopectin, cellulose acetate, cellulose nitrate, hydroxyethyl cellulose, ethyl hydroxyethyl cellulose, hydroxy propyl cellulose, polyvinyl alcohol, glycol, glycerol or pentaerythritol.

5. An article as claimed in any one of claims 1 to 4, wherein the adhesive or mastic contains not more than 30% by weight and preferably not more than 10% by weight, based on the total weight of the adhesive or mastic, of polyhydroxy compound.

6. A method of protecting a metal substrate from corrosion, which comprises providing the substrate with a protective dimensionally-recoverable cover and a layer of hot-melt adhesive or mastic disposed

5

**0 028 927**

between the substrate and the protective cover, the adhesive or mastic containing at least 0.01% by weight, based on the total weight of the adhesive or mastic of an organic, non-phenolic polyhydroxy compound in which the hydroxy groups are bonded to at least 50% of the aliphatic or alicyclic carbon atoms in an amount sufficient to impart improved resistance to cathodic disbonding to the adhesive or mastic.

7. A method as claimed in claim 6, which includes applying to the substrate a cathodic electrical potential with respect to earth.

8. An arrangement, which comprises a metal substrate which is protected from corrosion by a protective dimensionally-recoverable cover and a layer of hot-melt adhesive or mastic disposed between the substrate and cover, the adhesive or mastic containing at least 0.01% by weight, based on the total weight of the adhesive or mastic of an organic, non-phenolic polyhydroxy compound in which the hydroxy groups are bonded to at least 50% of the aliphatic or alicyclic carbon atoms in an amount sufficient to impart improved resistance to cathodic disbonding to the adhesive or mastic.

9. An arrangement as claimed in claim 8, wherein the substrate is maintained at an electrical potential that is negative with respect to earth.

10. An arrangement as claimed in claim 8 or 9, wherein the polyhydroxy compound is as specified in any one of claims 2 to 5.

11. An arrangement as claimed in any one of claims 8 to 10, wherein the adhesive or mastic contains not more than 30% by weight preferably not more than 10% by weight, based on the total weight of the adhesive or mastic, of polyhydroxy compound.

**Patentansprüche**

1. Artikel zum Schutz eines Substrats gegen Korrosion durch eine Schmelzklebstoff- oder Mastixschicht, die eine in den Abmessungen rückstellbare Deckschicht aufweist, die so beschaffen und ausgelegt ist, daß sie eine Außenfläche des Substrats umgibt und mit dieser zusammenarbeitet und die mit dem Klebstoff oder Mastix beschichtet ist, wobei der Klebstoff oder Mastix wenigstens 0,01 Gew.-%, basierend auf dem Gesamtgewicht des Klebstoffs oder Mastix, einer organischen, nicht phenolischen Polyhydroxy-Verbindung enthält, bei der die Hydroxygruppen an wenigstens 50% der aliphatischen oder alicyclischen Kohlenstoffatome in einer Menge gebunde sind, die ausreicht, daß der Klebstoff oder Mastix einen verbesserten Widerstand gegen kathodische Bindungslösung hat.

2. Artikel nach Anspruch 1, dadurch gekennzeichnet, daß die Polyhydroxy-Verbindung eine aliphatische oder alicyclische Polyhydroxy-Verbindung ist.

3. Artikel nach Anspruch 1 oder 2, dadurch gekennzeichnet, daß der Klebstoff oder Mastix ein Mono- oder Polysaccharid, ein Hydroxy enthaltendes synthetisches Polymer oder einen mehrwertigen Alkohol als Polyhydroxy-Verbindung enthält.

4. Artikel nach Anspruch 3, dadurch gekennzeichnet, daß der Klebstoff oder Mastix als Polyhydroxy-Verbindung ein oder mehrere der folgenden Stoffe enthält: Fructose, Mannose, Maltose, Saccharose, Glukose, Ribose, Raffinose, Mannit, Sorbit, Amylose, Amylopectin, Celluloseacetat, Cellulosenitrat, Hydroxyethylcellulose, Ethylhydroxyethylcellulose, Hydroxypropylcellulose, Polyvinylalkohol, Glykol, Glycerin oder Pnetaerythritol.

5. Artikel nach einem der Ansprüche 1 bis 4, dadurch gekennzeichnet, daß der Klebstoff oder Mastix nicht mehr als 30 Gew.-% und vorzugsweise nicht mehr als 10 Gew.-% Polyhydroxy-Verbindungen, basierend auf dem Gesamtgewicht des Klebstoffs oder Mastix, enthält.

6. Verfahren zum Schutz eines Metallsubstrats gegen Korrosion, das dadurch gekennzeichnet ist, daß das Substrat mit einer schützenden, in den Abmessungen rückstellbaren Abdeckung versehen wird und eine Schicht aus Schmelzklebstoff oder Mastix zwischen dem Substrat und der Schutzabdeckung angeordnet wird, und daß der Klebstoff oder Mastix wenigstens 0,01 Gew.-%, basierend auf dem Gesamtgewicht des Klebstoffs oder Mastix, einer organischen, nicht phenolischen Polyhydroxy-Verbindung enthält, bei der die Hydroxygruppen an wenigstens 50% der aliphatischen oder alicyclischen Kohlenstoffatome in einer Menge gebunden sind, die zur Verbesserung der Widerstandsfähigkeit gegen kathodische Bindungslösung des Klebstoffs oder Mastix ausreicht.

7. Verfahren nach Anspruch 6, dadurch gekennzeichnet, daß an das Substrat ein kathodisches elektrisches Potential bezüglich der Erdung angelegt wird.

8. Anordnung, die ein Metallsubstrat aufweist, das gegen Korrosion durch eine schützende, in den Abmessungen rückstellbare Abdeckung geschützt ist und eine Schicht aus Schmelzklebstoff oder Mastix aufweist, die zwischen dem Substrat und der Abdeckung angeordnet ist, wobei der Klebstoff oder Mastix wenigstens 0,01 Gew.-%, basierend auf dem Gesamtgewicht des Klebstoffs oder Mastix, einer organischen, nicht phenolischen Polyhydroxy-Verbindung enthält, bei der die Hydroxygruppen an wenigstens 50% der aliphatischen oder alicyclischen Kohlenstoffatome in einer Menge gebunden sind, die ausreicht, um dem Klebstoff oder Mastix eine verbesserte Widerstandsfähigkeit gegen kathodische Bindungslösung zu verleihen.

9. Anordnung nach Anspruch 8, dadurch gekennzeichnet, daß das Substrat auf einem elektrischen Potential gehalten wird, das bezüglich der Erdung negativ ist.

10. Anordnung nach Anspruch 8 oder 9, dadurch gekennzeichnet, daß die Polyhydroxy-Verbindung eine wie in einem der Ansprüche 2 bis 5 angegebene Verbindung ist.

11. Anordnung nach einem der Ansprüche 8 bis 10, dadurch gekennzeichnet, daß der Klebstoff oder Mastix nicht mehr als 30 Gew.-%, vorzugsweise nicht mehr als 10 Gew.-% der Polyhydroxy-Verbindung, basierend auf dem Gesamtgewicht des Klebstoffs oder Mastix, enthält.

**Revendications**

1. Un objet pour protéger un substrat de la corrosion au moyen d'une couche d'adhésif fondant à chaud ou de mastic comprend un revêtement à reprise dimensionnelle conçu pour enfermer une surface du substrat et être en appui contre elle et qui est enduit de l'adhésif ou du mastic, l'adhésif ou mastic contenant au moins 0,01% en poids, sur la base du poids total de l'adhésif ou du mastic, d'un ou de plusieurs composés organiques, non phénoliques, polyhydoxylés dans lesquels les groupes hydroxy sont liés à au moins 50% des atomes de carbone aliphatiques ou alicycliques dans une proportion suffisante pour conférer à l'adhésif ou au mastic une résistance améliorée au décollage cathodique.

2. Un objet tel que revendiqué dans la revendication 1, dans lequel le composé polyhydroxylé est un composé polyhydroxylé aliphatique ou alicyclique.

3. Un objet tel que revendiqué dans la revendication 1 ou 2, dans lequel l'adhésif ou le mastic contient un mono- ou un polysaccharide, un polymère synthétique contenant des groupes hydroxy ou un polyalcool, en tant que composé polyhydroxylé.

4. Un objet tel que revendiqué dans la revendication 3, dans lequel l'adhésif ou le mastic contient, en tant que composé polyhydroxylé, un ou plusieurs des ingrédients ci-après: fructose, mannose, maltose, sucrose, glucose, ribose, raffinose, mannitol, sorbitol, amylose, amylopectine, acétate de cellulose, nitrate de cellulose, hydroxyéthyl cellulose, éthyl hydroxyéthyl cellulose, hydroxy propyl cellulose, alcool polyvinylique, glycol, glycérol ou pentaérythritol.

5. Un objet tel que revendiqué dans l'une quelconque des revendications 1 à 4, dans lequel l'adhésif ou le mastic ne contient pas plus de 30% en poids et, de préférence, pas plus de 10% en poids, sur la base du poids total de l'adhésif ou du mastic, du composé polyhydroxylé.

6. Un procédé pour protéger un substrat métallique de la corrosion qui consiste à munir le substrat d'un revêtement protecteur à reprise dimensionnelle et d'une couche d'adhésif fondant à chaud ou de mastic disposée entre le substrat et le revêtement protecteur, l'adhésif ou le mastic contenant au moins 0,01% en poids, sur la base du poids total de l'adhésif ou du mastic, d'un ou de plusieurs composés organiques, non phénoliques, polyhydroxylés dans lesquels les groupes hydroxy sont lies à au moins 50% des atomes de carbone aliphatiques ou alicycliques dans une proportion suffisante pour conférer à l'adhésif ou au mastic une résistance améliorée au décollage cathodique.

7. Un procédé tel que revendiqué dans la revendication 6, qui comporte l'étape qui consiste à appliquer au substrat un potentiel électrique cathodique par rapport à la terre.

8. Un agencement qui comprend un substrat métallique qui est protégé de la corrosion par un revêtement protecteur à reprise dimensionnelle et par une couche d'adhésif fondant à chaud ou de mastic disposée entre le substrat et le revêtement, l'adhésif fondant à chaud ou le mastic contenant au moins 0,01% en poids sur la base du poids total de l'adhésif ou du mastic d'un ou de plusieurs composés organiques, non phénoliques, polyhydroxylés dans lesquels les groupes hydroxy sont liés à au moins 50% des atomes de carbone aliphatiques ou alicycliques dans une proportion suffisante pour conférer à l'adhésif ou au mastic une résistance améliorée au décollage cathodique.

9. Un agencement tel que revendiqué dans la revendication 8, dans lequel le substrat est maintenu à un potentiel électrique qui est négatif par rapport à la terre.

10. Un agencement tel que revendiqué dans la revendication 8 ou 9, dans lequel le composé polyhydroxylé est tel que spécifié dans l'une quelconque des revendications 2 à 5.

11. Un agencement tel que revendiqué dans l'une quelconque des revendications 8 à 10 dans lequel l'adhésif ou le mastic ne contient pas plus de 30% en poids et, de préférence, pas plus de 10% en poids, sur la base du poids total de l'adhésif ou du mastic, du composé polyhydroxylé.